# EUROPÄISCHE PATENTANMELDUNG

(11) **EP 4 696 123 A1**
(43) Veröffentlichungstag der Anmeldung: **18.02.2026**
(21) Anmeldenummer: 25194912.9
(22) Anmeldetag: 08.08.2025
(51) Int. Cl.: A01D 34/00

(54) **MÄHWERK**

(30) Priorität: 12.08.2024 DE 102024122903
(71) Anmelder: CLAAS Saulgau GmbH, 88348 Bad Saulgau (DE)
(72) Erfinder: Frye, Simon, 88348 Bad Saulgau (DE)

(57) **Zusammenfassung**

Die Erfindung betrifft ein Mähwerk (1), mit mehreren Mähorganen (3), die unter Ausbildung eines Mähbalkens (2) nebeneinander positioniert sind, wobei mindestens ein Schwingungsaufnehmer (4) vorgesehen ist, der beim Betrieb des Mähwerks (1) Schwingungen aufnimmt und eine Analyseeinheit (8) vorgesehen ist, welche die vom Schwingungsaufnehmer (4) aufgenommenen Schwingungssignale hinsichtlich ihrer Frequenz und/oder Amplitude auswertet und bei Überschreitung eines vorgegebenen Grenzwertes der Frequenz und/oder der Amplitude auf eine Wechselwirkung des Mähwerks (1) mit einem Fremdkörper (5) schließt.

## Beschreibung

Die Erfindung betrifft ein Mähwerk gemäß dem Oberbegriff des Patentanspruchs 1.

Aus DE 10 2020 124 992 A1 ist ein Mähwerk mit mehreren Mähorganen bekannt, die unter Ausbildung eines Mähbalkens nebeneinander positioniert sind, mit einem in Gutflussrichtung von gemähtem Erntegut gesehen hinter dem Mähbalken angeordneten Walzenaufbereiter, der eine obere Aufbereitungswalze und eine untere Aufbereitungswalze aufweist, wobei die untere Aufbereitungswalze um eine untere, ortsfeste Drehachse drehbar ist, wobei die obere Aufbereitungswalze um eine obere, verlagerbare Drehachse derart drehbar ist, dass in Folge einer Verlagerung der oberen Drehachse relativ zur unteren Drehachse ein Spalt zwischen den Aufbereitungswalzen veränderlich ist.

Beim Ernten von Gras, Luzernen oder ähnlichen Erntegütern mit einem Mähwerk, das von einem Traktor als Trägerfahrzeug betrieben wird, werden schädliche Fremdkörper, wie Steine oder Holzstücke, im Erntegut erst im letzten Arbeitsschritt detektiert und dies auch nur dann, wenn ein entsprechend ausgestatteter Feldhäcksler, statt eines Ladewagens oder statt einer Ballenpresse zum Abfahren des Erntegutes verwendet wird.

Aus der nicht vorveröffentlichten Patentanmeldung DE 10 2023 134 641.5 ist ein Mähwerk mit mehreren Mähorganen und einem Walzenaufbereiter bekannt, der mit einer Einrichtung zur Erkennung von Fremdkörpern im gemähten Erntegut ausgestattet ist.

Hiervon ausgehend ist es die Aufgabe der Erfindung, ein neuartiges Mähwerk, ohne Walzenaufbereiter zu schaffen, mit dem Fremdkörper detektiert werden können.

Diese Aufgabe wird erfindungsgemäß durch die kennzeichnenden Merkmale des Patentanspruchs 1 gelöst.

Ein erfindungsgemäßes Mähwerk weist mehrere nebeneinander positionierte Mähorgane auf, die einen Mähbalken ausbilden, wobei mindestens ein Schwingungsaufnehmer vorgesehen ist, der beim Betrieb des Mähwerks Schwingungen aufnimmt und eine Analyseeinheit vorgesehen ist, welche die vom Schwingungsaufnehmer aufgenommenen Schwingungssignale hinsichtlich ihrer Frequenz und/oder Amplitude auswertet und bei Überschreitung eines vorgegebenen Grenzwertes der Frequenz und/oder der Amplitude auf eine Wechselwirkung des Mähwerks mit einem Fremdkörper schließt.

Durch die Erkennung von Fremdkörpern, insbesondere von Steinen, am Mähwerk durch einen erfindungsgemäßen Schwingungsaufnehmer können schädliche Fremdkörper bereits frühzeitig aufgefunden und von der Wiese bzw. aus dem Erntegut entfernt werden. Dadurch können Schäden an nachfolgenden Maschinen besonders vorteilhaft verhindert werden.

Gemäß einer vorteilhaften Weiterbildung sind vorzugsweise mehrere Schwingungsaufnehmer am Mähwerk angeordnet, wobei besonders bevorzugt jeweils an beiden seitlichen Enden des Mähbalkens jeweils ein Schwingungsaufnehmer angeordnet ist. Dadurch lassen sich detektierte Fremdkörper besonders vorteilhaft innerhalb des Mähwerks lokalisieren, indem die erfassten Schwingungsamplituden der beiden Schwingungsaufnehmer miteinander abgeglichen werden.

Nach einer weiteren vorteilhaften Weiterbildung ist der oder die Schwingungsaufnehmer als Mikrofon, Klopfsensor oder Körperschallmikrofon ausgeführt.

Nach einer weiteren vorteilhaften Weiterbildung ist vorgesehen, dass die Analyseeinheit bei Erkennung eines Fremdkörpers ein akustisches und/oder optisches Signal generiert, welches der Bedienende in der Fahrerkabine des Trägerfahrzeugs wahrnehmen kann. Der Bedienende kann dann bei einer Kollision mit einem Fremdkörper den Zustand des Mähwerks begutachten und ggf. Messerschäden erkennen sowie direkt durch Austausch beheben. Dadurch wird vorteilhaft verhindert, dass Teilflächen unbearbeitet bleiben, also Erntegut stehen bleibt.

Nach einer weiteren vorteilhaften Weiterbildung ist die Analyseeinheit datentechnisch mit einer Steuerungseinrichtung des Mähwerks verbunden, die dazu eingerichtet ist, Positionsdaten eines GPS-Systems zu empfangen und bei Auffinden oder Erkennen eines Fremdkörpers, dessen Positionsdaten zu speichern. Durch die Aufzeichnung der GPS-Koordinaten wird es vorteilhaft ermöglicht, die erkannten Fremdkörper zu einem späteren Zeitpunkt durch eine unabhängige Arbeitskraft, die geringere Kosten als ein Trägerfahrzeug mit Mähwerk verursacht, vom Feld zu entfernen. Außerdem wird dadurch der Mähprozess nicht unterbrochen oder verzögert. Auf der Grundlage der Positionsdaten eines Fremdkörpers können vorteilhaft Hinweise für, in der Erntekette nachfolgende, landwirtschaftliche Maschinen generiert werden, um die Fahrerin bzw. den Fahrer rechtzeitig vor Erreichen der Position des Fremdkörpers zu warnen.

Durch den erfindungsgemäßen Schwingungsaufnehmer ist es besonders vorteilhaft möglich unabhängig von der Bauart eines Mähwerks Fremdkörper an einem Mähwerk zu detektieren. Dadurch können Schäden an einem Mähwerk frühzeitig erkannt und behoben sowie auch Schäden an nachfolgenden Maschinen können vorteilhaft vermieden werden.

Mit einem erfindungsgemäßen Mähwerk können Stillstandzeiten einer Futtererntekette vorteilhaft reduziert sowie Futterverunreinigungen vermieden werden.

Darüber hinaus wird die Fahrerin oder der Fahrer beim Mähvorgang vorteilhaft entlastet.

Weitere bevorzugte Weiterbildungen der Erfindung ergeben sich aus den Unteransprüchen und der Beschreibung. Nachfolgend werden die Merkmale der vorliegenden Erfindung anhand von Ausführungsbeispielen, ohne hierauf beschränkt zu sein, näher erläutert. In den zugehörigen schematischen Zeichnungen zeigt, die
- Fig. 1: eine Vorderansicht eines erfindungsgemäßen Mähwerks und die
- Fig. 2: ein Diagramm mit einem beispielhaften Amplitudenverlauf.

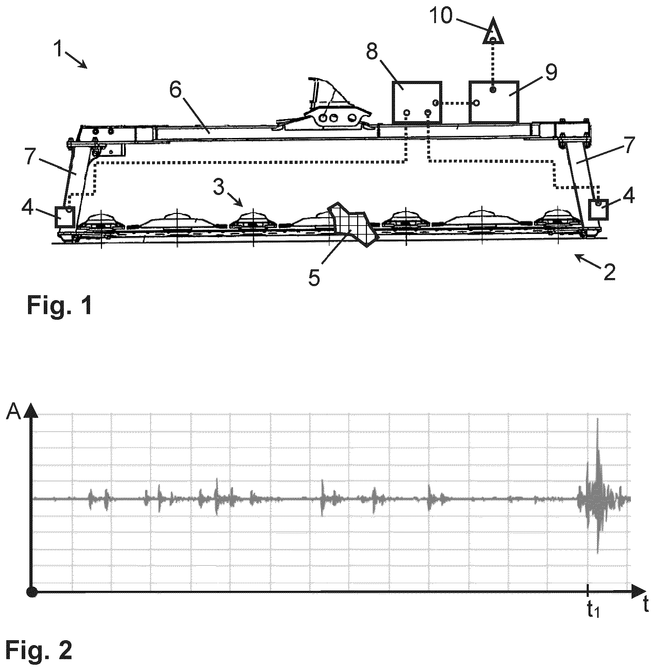

Fig. 1 zeigt eine stark schematisierte Seitenansicht eines erfindungsgemäßen Mähwerks 1 mit einem Mähbalken 2, der aus mehreren nebeneinander positionierten Mähorganen 3 besteht. Der Mähbalken 2 ist über Streben 7 mit einem Gestell 6 verbunden. Zur besseren Übersichtlichkeit wurden weitere Teile des Gestells bzw. Rahmenelemente, Verkleidungsteile, Schutztücher usw. in dieser Darstellung weggelassen.

Das Mähwerk 1 wird in allgemein bekannter Weise von einem Trägerfahrzeug, wie einem Traktor, aufgenommen, angetrieben und zum Ernteprozess in Fahrtrichtung des Traktors bewegt. In dieser Ansicht verläuft die Fahrtrichtung aus der Bildebene heraus. Das Mähwerk 1 kann als Frontmähwerk, Heckmähwerk oder als gezogenes Mähwerk ausgeführt sein.

Im dargestellten Ausführungsbeispiel ist an beiden Streben 7 jeweils ein Schwingungsaufnehmer 4 angeordnet, die mit einer Analyseeinheit 8 signaltechnisch verbunden sind. Es würde auch genügen, lediglich einen Schwingungsaufnehmer 4 vorzusehen. Der oder mehrere Schwingungsaufnehmer 4 können auch an anderen Positionen des Mähwerks 1 montiert werden.

Ein Schwingungsaufnehmer 4 kann beispielsweise als Mikrofon, Klopfsensor oder Körperschallmikrofon ausgeführt sein.

Der oder die mehreren Schwingungsaufnehmer 4 nehmen die Schwingungen auf, welche beim Betrieb des Mähwerks 1 erzeugt werden und senden diese Signale an die Analyseeinheit 8, welche die Schwingungssignale hinsichtlich ihrer Frequenz und/oder Amplitude auswertet.

Während eines normalen Erntevorgangs, also ohne Kollision mit einem Fremdkörper 4, entsteht ein für das Mähwerk 1 charakteristisches Schwingungssignal, das sich aus der Zapfwellendrehzahl sowie den Übersetzungen der Getriebe bzw. Zähnezahlen der beteiligten Zahnräder ableiten lässt. Diese Schwingungscharakteristik ist in der Analyseeinheit 8 hinterlegt.

Im Diagramm, gemäß Fig. 2, ist die Amplitude A der aufgenommenen Schwingungen über der Zeit t aufgetragen.

Im Falle einer Kollision des Mähwerks 1, insbesondere des Mähbalkens 2, mit einem Fremdkörper 5 verändern sich die durch den oder die Schwingungsaufnehmer 4 erfassten Signale hinsichtlich ihrer Amplitude und im Frequenzbereich hinsichtlich des Spektrums. Während des Betriebs des Mähwerks 1 gleicht die Analyseeinheit 8 die ihr übermittelten Schwingungssignale kontinuierlich mit dem charakteristischen Schwingungssignal des Mähwerks 1 ab. Der Verlauf der Amplituden A bis zum Zeitpunkt t₁ - gemäß Fig. 2 - entspricht dem eines charakteristischen Schwingungssignals. Falls die aktuellen Schwingungssignale gegenüber den charakteristischen Schwingungssignalen abweichen und die Abweichung hinsichtlich ihrer Frequenz und/oder ihrer Amplitude einen vorgegebenen Grenzwert überschreitet, dann schließt die Analyseeinheit 8 auf eine Wechselwirkung des Mähwerks 1 mit einem Fremdkörper 5.

Bei einer Kollision des Mähwerks 1 mit einem Fremdkörper 5 kommt es zu einem sprunghaften Anstieg der Amplitude des Signals und die Frequenzen weichen von den charakteristischen Frequenzen im Normalbetrieb ab. Im Diagramm gemäß Fig. 2 ist zum Zeitpunkt t₁ ein beispielhafter Amplitudenverlauf mit vergrößerter Amplitude bei einer Kollision mit einem Fremdkörper 5 dargestellt.

Bei einer Kollision mit einem Fremdkörper 5 aus harten Materialien (beispielsweise Stein) sind höherfrequente Schwingungen zu beobachten als bei Kollisionen mit Fremdkörpern 5, die aus weicheren Materialien bestehen (z.B. morsches Holz).

Die Analyseeinheit 8 ist vorzugsweise dazu eingerichtet, bei Erkennung eines Fremdkörpers 5 ein akustisches und/oder optisches Signal zu generieren, welches im Bedienterminal angezeigt wird bzw. in der Kabine des Trägerfahrzeugs ertönt. Anhand der Höhe der Frequenz ist es möglich, die Art des detektierten Fremdkörpers (hart oder weich; Stein oder Holz) zu bestimmen und im Bedienterminal anzuzeigen.

Vorzugsweise werden am Mähwerk 1 mehrere Schwingungsaufnehmer 4 angeordnet, wobei besonders bevorzugt jeweils an beiden seitlichen Enden des Mähbalkens 2 ein Schwingungsaufnehmer 4 vorgesehen ist. Durch die Anordnung mehrerer Schwingungsaufnehmer 4 ist es möglich, die Position des Fremdkörpers 5 zu lokalisieren. Dazu gleicht die Analyseeinheit 8 die Amplituden der beiden Schwingungsaufnehmer 4 miteinander ab und der Fremdkörper 5 befindet sich näher an dem Schwingungsaufnehmer 4 mit der höheren Amplitude. Die Analyseeinheit 8 kann dazu eingerichtet sein, ein Signal zu erzeugen, um die Position des Fremdkörpers 5 innerhalb des Mähwerks 1 im Bedienterminal des Trägerfahrzeugs anzuzeigen bzw. zu visualisieren.

Die Analyseeinheit 8 ist vorzugsweise datentechnisch mit einer Steuerungseinrichtung 9 des Mähwerks 1 verbunden, die dazu eingerichtet ist, Positionsdaten eines GPS-Systems 10 zu empfangen und bei Auffinden oder Erkennen eines Fremdkörpers 5, dessen Positionsdaten zu speichern. Dazu sendet die Analyseeinheit 8 beim Auffinden eines Fremdkörpers 5 - z.B. zum Zeitpunkt t₁ gemäß Fig. 2 - ein entsprechendes Signal an die Steuerungseinrichtung 9.

Aus den gespeicherten Positionsdaten der aufgefundenen Fremdkörper 5 kann eine Karte generiert werden, anhand der in einem nachfolgenden Arbeitsschritt nach dem Mähen die Fremdkörper 5 vom Feld entfernt werden können.

Alternativ kann die Steuerungseinrichtung 9 die Positionsdaten der aufgefundenen Fremdkörper 5 einem übergeordneten Datensystem bereitstellen, auf welches andere an der Erntekette beteiligte Maschinen zugreifen können. Ein übergeordnetes Steuerungssystem oder Steuerungseinrichtungen von in der Erntekette nachfolgenden landwirtschaftlichen Maschinen können daraus Hinweise generieren, um die Fahrer oder Bediener frühzeitig vor den Fremdkörpern 5 zu warnen.

In der vorangehenden Beschreibung wurde das Mähwerk 1 sehr stark schematisiert dargestellt und auch nur die Bauteile beschrieben, welche für die vorliegende Erfindung relevant sind. Selbstverständlich weist ein erfindungsgemäßes Mähwerk 1 auch alle weiteren allgemein üblichen und dem Fachmann hinlänglich bekannten Bauteile auf.

### Bezugszeichenliste

- 1: Mähwerk
- 2: Mähbalken
- 3: Mähorgan
- 4: Schwingungsaufnehmer
- 5: Fremdkörper
- 6: Gestell
- 7: Strebe
- 8: Analyseeinheit
- 9: Steuerungseinrichtung
- 10: GPS-System

- A: Amplitude
- t: Zeit

## Patentansprüche

1. Mähwerk (1), mit mehreren Mähorganen (3), die unter Ausbildung eines Mähbalkens (2) nebeneinander positioniert sind, **dadurch gekennzeichnet, dass,** mindestens ein Schwingungsaufnehmer (4) vorgesehen ist, der beim Betrieb des Mähwerks (1) Schwingungen aufnimmt und eine Analyseeinheit (8) vorgesehen ist, welche die vom Schwingungsaufnehmer (4) aufgenommenen Schwingungssignale hinsichtlich ihrer Frequenz und/oder Amplitude auswertet und bei Überschreitung eines vorgegebenen Grenzwertes der Frequenz und/oder der Amplitude auf eine Wechselwirkung des Mähwerks (1) mit einem Fremdkörper (5) schließt.

2. Mähwerk (1) nach Anspruch 1, **dadurch gekennzeichnet, dass** ein Schwingungsaufnehmer (4) am Mähbalken (2) angeordnet ist, vorzugsweise an einem seitlich äußeren Mähorgan (3) oder an einer seitlichen Strebe (7).

3. Mähwerk (1) nach Anspruch 2, **dadurch gekennzeichnet, dass** mehrere Schwingungsaufnehmer (4) am Mähwerk (1) angeordnet sind, wobei vorzugsweise jeweils an beiden seitlichen Enden des Mähbalkens (2) ein Schwingungsaufnehmer (4) vorgesehen ist.

4. Mähwerk (1) nach einem der vorhergehenden Ansprüche, **dadurch gekennzeichnet, dass** der oder die Schwingungsaufnehmer (4) als Mikrofon, Klopfsensor oder Körperschallmikrofon ausgeführt ist oder sind.

5. Mähwerk (1) nach einem der vorhergehenden Ansprüche, **dadurch gekennzeichnet, dass** die Analyseeinheit (8) bei Erkennung eines Fremdkörpers (5) ein akustisches und/oder optisches Signal generiert.

6. Mähwerk (1) nach einem der vorhergehenden Ansprüche, **dadurch gekennzeichnet, dass** die Analyseeinheit (8) datentechnisch mit einer Steuerungseinrichtung (9) des Mähwerks (1) verbunden ist, die dazu eingerichtet ist, Positionsdaten eines GPS-Systems (10) zu empfangen und bei Auffinden oder Erkennen eines Fremdkörpers (5), dessen Positionsdaten zu speichern.
